# EUROPEAN PATENT SPECIFICATION

(11) **EP 4 198 936 B1**
(45) Date of publication and mention of the grant of the patent: **30.04.2025**
(21) Application number: 22213664.0
(22) Date of filing: 15.12.2022
(51) Int. Cl.: G08B 25/00, G08B 25/10, H04L 45/00, H04W 56/00, H04W 28/02, G08B 17/00

(54) **ALARM SYSTEM, ALARM, TRANSFER METHOD, PROGRAM**
ALARMSYSTEM, ALARM, ÜBERTRAGUNGSVERFAHREN UND PROGRAMM
SYSTÈME D'ALARME, ALARME, PROCÉDÉ DE TRANSFERT, PROGRAMME

(30) Priority: 16.12.2021 JP 2021204318
(43) Date of publication of application: 21.06.2023
(73) Proprietor: Panasonic Intellectual Property Management Co., Ltd., Osaka-shi, Osaka 540-6207 (JP)
(72) Inventor: HARADA, Kenji, Osaka, 540-6207 (JP); HARA, Yuta, Osaka, 540-6207 (JP); OHASHI, Tetsuya, Osaka, 540-6207 (JP); HOSHIBA, Keitaro, Osaka, 540-6207 (JP)
(74) Representative: Appelt, Christian W.

(56) References cited:
- WO-A1-02/37752
- WO-A1-2015/084669
- JP-A- 2022 085 866

## Description

### [TECHNICAL FIELD]

The present disclosure relates to alarm technology and, in particular, to an alarm system, an alarm, a relay route setting method, and a program that use a multihop network.

### [BACKGROUND ART]

A fire alarm outputs an alarm when it detects a fire. By building wireless communication functions in the fire alarm and forming a multihop network by a plurality of fire alarms, it is possible, when one fire alarm detects a fire, for another fire alarm to output an alarm (see, for example, JP2011-35468).
WO 02/37752 A1 describes the scheduling of data transfers in a multi-hop packet network. The nodes of the network are adapted to schedule their transmissions according to a common time sequence, recurring in time domain and comprising a control portion for transmission of at least one control packet and a data portion for transmission of data packets. In order to accomplish a simple and controlled way for minimizing delay and delay variation, the network is classified into several levels with respect to a certain node, each level comprising the nodes located at the same distance from said certain node, measured in number of hops along the shortest path in the network. The data portion is further divided into successive reservation periods, each being allocated to transmissions of delay sensitive traffic through the hops between two predetermined neighboring levels so that a data packet can be transferred across the network within a single time sequence.
WO 2015/084669 A1 describes a sensor network that includes a sink and multiple sensor nodes. The sink is coupled to a substrate and configured to transmit a periodic ultrasonic pulse on the substrate. A first one of the sensor nodes is coupled to the substrate. The first sensor node is configured to (i) receive the periodic ultrasonic pulse from the substrate, (ii) synchronize an internal clock of the first sensor node to the sink based on the periodic ultrasonic pulse, (iii) selectively detect an event in a region surrounding the first sensor node, and (iv) in response to detecting the event, transmit a first ultrasonic pulse toward the sink on the substrate.
JP 2022-085866 A describes a relay device, which can receive communication signals from each of a plurality of fire alarms. A plurality of communication time slots in which each of the plurality of fire alarms can transmit a communication signal and a monitoring time slot in which the fire alarm scheduled to transmit the communication signal should transmit the monitoring signal in the communication time slots are arranged in a time axis. A monitoring unit monitors to receive the monitoring signal in the monitoring time slot. When the monitoring unitdoes not detect receiving the monitoring signal, a control unit stops the communication signal reception processing in the plurality of communication time slots. When the monitoring unit detects receiving the monitoring signal, the control unit executes the communication signal reception processing in one or more of the plurality of communication time slots.[SUMMARY OF

### INVENTION]

### [TECHNICAL PROBLEM]

The fire alarm and the relay device included in a multihop network are required to stand by for a signal constantly unless the timing of a signal is known. By standing by for a signal constantly, the power consumption in the relay device and the fire alarm is increased. Also, formation of a multihop network by a plurality of fire alarms may result in a long delay time in transfer in the multihop network. It is therefore required to reduce the delay time in transfer in a multihop network while at the same time reducing the power consumption.

The present disclosure addresses this issue, and a purpose thereof is to provide a technology of reducing the delay time in transfer in a multihop network, while at the same time reducing the power consumption.

### [SOLUTION TO PROBLEM]

The present invention relates to an alarm according to claim 1, an alarm system according to claim 2, a method according to claim 8, and a program according to claim 9. Claims 3 to 7 refer to specifically advantageous realizations of the alarm system according to claim 2.

Optional combinations of the aforementioned constituting elements, and implementations of the disclosure in the form of methods, apparatuses, systems, recording mediums, and computer programs may also be practiced as additional modes of the present disclosure.

### [ADVANTAGEOUS EFFECTS OF INVENTION]

According to the present disclosure, it is possible to reduce the delay time in transfer in a multihop network, while at the same time reducing the power consumption.

### [BRIEF DESCRIPTION OF DRAWINGS]

Fig. 1 shows a configuration of an alarm system according to an embodiment;
Fig. 2 shows a configuration of the fire alarm of Fig. 1;
Figs. 3A-3D show a configuration of a super frame used in the alarm system of Fig. 1;
Fig. 4 shows an exemplary assignment of the time slots in the alarm system of Fig. 1;
Fig. 5 shows an outline of downlink communication in the alarm system of Fig. 1;
Figs. 6A-6C show an outline of uplink communication in the alarm system of Fig. 1;
Figs. 7A-7D show an outline of uplink communication in the alarm system of Fig. 1;
Fig. 8 shows an exemplary assignment of the time slots in the alarm system of the comparative example; and
Fig. 9 shows an outline of uplink communication in the alarm system of Fig. 8.

### [DESCRIPTION OF EMBODIMENTS]

A brief summary will be given before describing the present disclosure in specific details. The embodiment relates to an alarm system provided in a facility such as a multi-unit apartment building, an independent housing, an office, and a hospital. In the alarm system, a relay device is connected to a management device, and a plurality of fire alarms are connected to the relay device in a multihop network. In this network, the management device represents the higher level, and the fire alarm with the largest hop count from the relay device represents the lower level. Upon detecting an outbreak of a fire, the fire alarm transfers a result of detection to the relay device, and the relay device transfers the result of detection to the management device. When the result of detection is received, the management device selects one or more fire alarms that should sound an alarm and transmits an instruction to sound an alarm to the one or more selected fire alarms as the ultimate destinations. The relay device and the fire alarm transfer the instruction to sound an alarm to the fire alarm at the ultimate destination, and the fire alarm at the ultimate destination sounds an alarm upon receiving the instruction to output an alarm.

Given that the line for a signal from the relay device to the fire alarm with the largest hop count from the relay device is referred to as "downlink line", the line for a signal from the fire alarm with the largest hop count to the relay device is referred to as "uplink line". In this embodiment, one frame is formed by arranging a plurality of time slots, and one super frame is formed by arranging a plurality of frames. Further, one fire alarm is allocated to one of time slots for the downlink line (hereinafter, "downlink communication time slot") and is also allocated to one of time slots for the uplink line (hereinafter, "uplink communication time slot"). The downlink communication time slot is used for transfer on the downlink line, and the uplink communication time slot is used for transfer on the uplink line.

In the downlink line, a signal (hereinafter, "synchronization signal") for establishing and maintaining synchronization for mutual transmission and reception by the relay device and the fire alarm in the multihop network using time slots is periodically transferred in addition to the instruction to sound an alarm. On the other hand, the uplink line is used mainly to transfer a detection result so that the traffic on the uplink line is extremely low. However, the fire alarm in a multihop network should monitor whether a detection result is transmitted in uplink communication time slots assigned to other fire alarms on the lower level. In particular, when the number of fire alarm on the lower level is increased, the number of uplink communication time slots that should be monitored is increased so that the power consumption in the fire alarms is increased. In the following description, a synchronization signal, a detection result, an instruction to sound an alarm may generically be referred to as "communication signals".

A monitoring time slot is introduced to suppress an increase in the power consumption in the fire alarm. As described above, a frame includes a plurality of downlink communication time slots and a plurality of uplink communication time slots. A frame also includes a time slot for monitoring (hereinafter, "monitoring time slot") in which the fire alarm scheduled to transmit a communication signal in the assigned uplink communication time slot transmits a signal (hereinafter, "monitoring signal"). Each fire alarm stands by for the reception of a monitoring signal in the monitoring time slot. When a monitoring signal is received in the monitoring time slot, the fire alarm stands by for the reception of a communication signal in the uplink communication time slot assigned to the fire alarm. When a monitoring signal is not received in the monitoring time slot, on the other hand, the fire alarm does not stand by for the reception of a communication signal in the uplink communication time slot assigned to the fire alarm.

By introducing a monitoring time slot, the time slot in which the fire alarm should stand by is limited so that the power consumption in the fire alarm is reduced. When a frame is comprised of only one monitoring time slot, however, transfer of a communication signal in the multihop network will have to extend over a plurality of frames because the number of fire alarms capable of transferring a communication signal in one frame is "1". Accordingly, reduction in the delay time in transfer is called for. In this embodiment, a plurality of monitoring time slots are included in one frame to reduce the delay time in transfer.

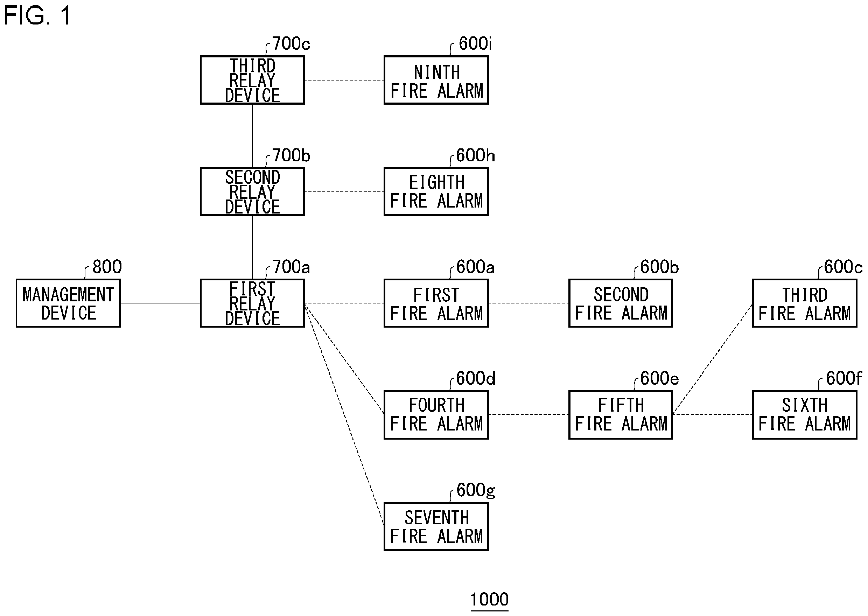

Fig. 1 shows a configuration of an alarm system 1000. The alarm system 1000 includes a first fire alarm 600a through a ninth fire alarm 600i, which are generically referred to as fire alarms 600, a first relay device 700a through a third relay device 700c, which are generically referred to as relay devices 700, and a management device 800. The number of fire alarms 600 is not limited to "9", and the number of relay devices 700 is not limited to "3".

The alarm system 1000 is a system applied to facilities such as houses, offices, and commercial facilities to detect a fire and alert that a fire has broken out. The plurality of fire alarm 600 are, for example, home fire alarms and are provided with fire detection sensors. The plurality of fire alarm 600 are provided on, for example, the ceilings of facilities but may be provided on the walls, etc.

The first fire alarm 600a through the sixth fire alarm 600f form a multihop network extending from the first relay device 700a. For example, a relay route that links the first relay device 700a, the first fire alarm 600a, and the second fire alarm 600b and a relay route that links the first relay device 700a, the fourth fire alarm 600d, the fifth fire alarm 600e, and the third fire alarm 600c are formed. Further, a relay route that links the first relay device 700a, the fourth fire alarm 600d, the fifth fire alarm 600e, and the sixth fire alarm 600f and a relay route that links the first relay device 700a and the seventh fire alarm 600g are also formed. These relay routes are determined by the respective fire alarms 600 and are shared by the first relay device 700a and the management device 800.

In these relay routes, the first fire alarm 600a, the fourth fire alarm 600d, and the seventh fire alarm 600g can communicate with the first relay device 700a in "1" hop. The second fire alarm 600b and the fifth fire alarm 600e can communicate with the first relay device 700a in "2" hops. The third fire alarm 600c and the sixth fire alarm 600f can communicate with the first relay device 700a in "3" hops.

The second relay device 700b, the third relay device 700c, the eighth fire alarm 600h, and the ninth fire alarm 600i are configured in a manner similar to that of the first relay device 700a, the first fire alarm 600a, etc. For example, a multihop network starting from the first relay device 700a is provided on the first floor of a facility, a multihop network starting from the second relay device 700b is provided on the second floor of the facility, and a multihop network starting from the third relay device 700c is provided on the third floor of the facility. Different frequencies are used in the multihop network starting from the first relay device 700a, the multihop network starting from the second relay device 700b, and the multihop network starting from the third relay device 700c. Further, the first relay device 700a, the second relay device 700b, and the third relay device 700c communicate with each other wirelessly or by wire.

Thus, the relay device 700 communicates with the plurality of fire alarm 600 that form the multinetwork wirelessly and also communicates with the other relay devices 700 wirelessly or by wire. It can be said that the relay device 700 relays communication between the plurality of fire alarm 600 included in the multihop network. Further, the first relay device 700a is connected to the management device 800 by a cable and communicates with the management device 800 by wire. The first relay device 700a and the management device 800 may communicated wirelessly.

The management device 800 is, for example, a controller of a home energy management system (HEMS) provided in the facility. The management device 800 can communicate with a plurality of appliances provided in the facility. The plurality of appliances include, for example, air conditioners, illumination appliances, hot water dispensers, etc. having a communication function. Further, the management device 800 can communicate with the first relay device 700a provided in the facility. The management device 800 can also communicate with the second relay device 700b, the third relay device 700c, and the fire alarms 600 via the first relay device 700a.

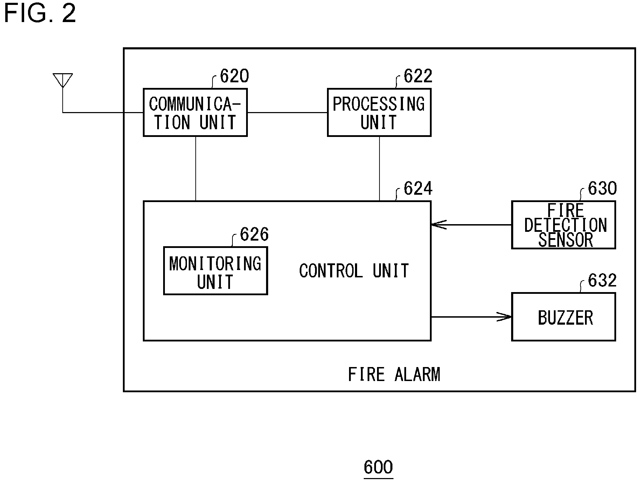

Fig. 2 shows a configuration of the fire alarm 600. The fire alarm 600 includes a communication unit 620, a processing unit 622, a control unit 624, a fire detection sensor 630, and a buzzer 632, and the control unit 624 includes a monitoring unit 626. The processing unit 622 and the control unit 624 may be integrated. A publicly known technology may be used in the fire detection sensor 630. For example, the fire detection sensor 630 may be an optical smoke detection sensor and may detect a fire by detecting the smoke in a fire by utilizing diffuse reflection of light. For example, the fire detection sensor 630 may be a heat detection sensor and may detect a fire by detecting the heat from a fire. For example, the fire detection sensor 630 may be a carbon monoxide detection sensor and may detect a fire by detecting the density of carbon monoxide generated by combustion in a fire. For example, the fire detection sensor 630 may be an infrared detection sensor and may detect a fire by detecting infrared rays radiated by combustion in a fire.

The communication unit 620 communicates with the other fire alarm 600 or the relay device 700 wirelessly. The communication unit 620 may perform communication by wire. The processing unit 622 processes a signal received by the communication unit 620 or generates a signal that should be transmitted from the communication unit 620. The control unit 624 controls the operation of the communication unit 620 and the processing unit 622. The detail of the control unit 624 will be described later. The buzzer 632 can output a buzzer sound. The fire alarm 600 may be configured not to include the buzzer 632 and include the fire detection sensor 630. In other words, the fire alarm 600 may be configured to have the detection function and the communication function. The fire alarm 600 configured as described above can be said to be a sensor capable of alerting that a fire is detected.

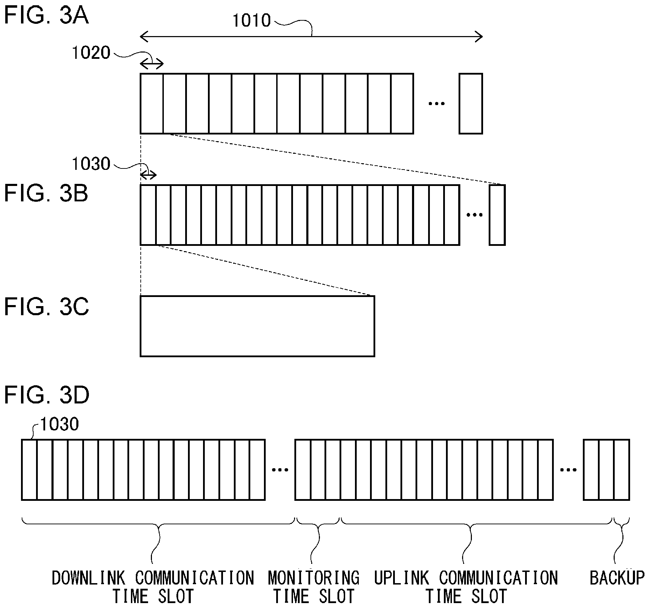

Figs. 3A-3D show a configuration of a super frame 1010 used in the alarm system 1000. As shown in Fig. 3A, a predefined period of time is defined as the super frame 1010. The super frame 1010 is arranged repeatedly. The super frame 1010 is divided into a plurality of frames 1020. As shown in Fig. 3B, one frame 1020 is divided into a plurality of time slots 1030. Fig. 3C shows one time slot 1030. The communication signal or the monitoring signal is transmitted in the time slot 1030. The duration of the communication signal or the monitoring signal is shorter than the duration of one time slot 1030.

Fig. 3D shows the usage of the plurality of time slots 1030 included in the frame 1020 shown in Fig. 3B. Of the plurality of time slots 1030, one or more time slots 1030 in the leading portion are used as "downlink communication time slots". Three time slots 1030 following the downlink communication time slots are used as "monitoring time slots". One or more time slots 1030 following the three monitoring time slots are used as "uplink communication time slots". One or more time slots 1030 following the uplink communication time slots are used as "backup slots". The number of downlink communication time slots and the number of uplink communication time slots are identical and are equal to or larger than the number of fire alarms 600 included in the multihop network. The number of monitoring time slots is not limited to "3". Backup slots may not be provided.

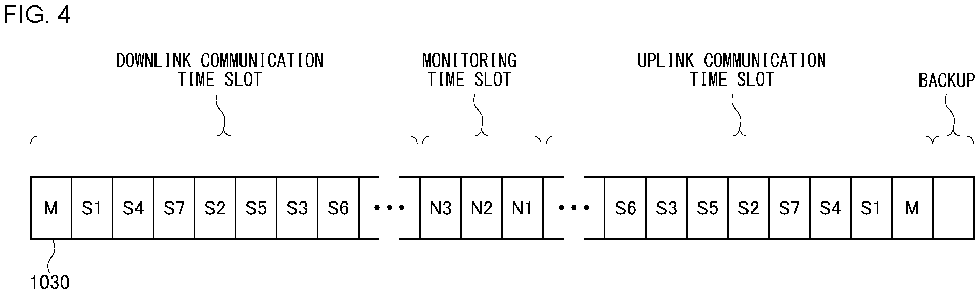

Fig. 4 shows an exemplary assignment of the time slots 1030 in the alarm system 1000 as similarly shown in Fig. 3D. The figure shows the assignment of a plurality of time slots 1030 to the first relay device 700a, the first fire alarm 600a through the seventh fire alarm 600g of Fig. 1. "M" in Fig. 4 denotes the first relay device 700a, and "S1" through "S7" denote the first fire alarm 600a through the seventh fire alarm 600g, respectively. "N1", "N2", and "N3" will be described later.

The first relay device 700a, the first fire alarm 600a, the fourth fire alarm 600d, the seventh fire alarm 600g, the second fire alarm 600b, the fifth fire alarm 600e, the third fire alarm 600c, and the sixth fire alarm 600f are sequentially allocated to downlink communication time slots, with the first relay device 700a preceding the rest. As described above, the hop count from the first fire alarm 600a, the fourth fire alarm 600d, and the seventh fire alarm 600g to the first relay device 700a is "1". The hop count from the second fire alarm 600b and the fifth fire alarm 600e to the first relay device 700a is "2", and the hop count from the third fire alarm 600c and the sixth fire alarm 600f to the first relay device 700a is "3". In other words, the smaller the hop count to the first relay device 700a, the earlier the downlink communication slot assigned to the fire alarm 600.

The the sixth fire alarm 600f, the third fire alarm 600c, the fifth fire alarm 600e, the second fire alarm 600b, the seventh fire alarm 600g, the fourth fire alarm 600d, the first fire alarm 600a, and the first relay device 700a are sequentially allocated to uplink communication time slots, with the sixth fire alarm 600f preceding the rest. In other words, the larger the hop count to the first relay device 700a, the earlier the uplink communication time slot assigned to the fire alarm 600.

To highlight the fifth fire alarm 600e, the fifth fire alarm 600e is allocated to the downlink communication time slot later than the time slot allocated to the fourth fire alarm 600d and earlier than the time slots allocated to the third fire alarm 600c and the sixth fire alarm 600f. The fifth fire alarm 600e is allocated to the uplink communication time slot later than the time slots allocated to the third fire alarm 600c and the sixth fire alarm 600f and earlier than the time slot allocated to the fourth fire alarm 600d.

The monitoring time slots "N1", "N2", and "N3" are arranged earlier than the downlink communication time slot. The monitoring time slot "N1" is the time slot 1030 in which the fire alarm 600 with the hop count "1" from the first relay device 700a should transmit the monitoring signal for reception by the first relay device 700a. The fire alarms 600 with the hop count "1" from the first relay device 700a correspond to the first fire alarm 600a, the fourth fire alarm 600d, and the seventh fire alarm 600g of Fig. 1.

The monitoring time slot "N2" is the time slot 1030 in which the fire alarm 600 with the hop count "2" from the first relay device 700a should transmit the monitoring signal for reception by the fire alarm 600 with the hop count "1" from the first relay device 700a. The fire alarms 600 with the hop count "2" from the first relay device 700a correspond to the second fire alarm 600b and the fifth fire alarm 600e of Fig. 1.

The monitoring time slot "N3" is the time slot 1030 in which the fire alarm 600 with the hop count "3" from the first relay device 700a should transmit the monitoring signal for reception by the the fire alarm 600 with the hop count "2" from the first relay device 700a. The fire alarms 600 with the hop count "3" from the first relay device 700a correspond to the third fire alarm 600c and the sixth fire alarm 700f of Fig. 1.

The monitoring time slots are arranged in the order "N3", "N2", and "N1". In other words, the larger the hop count of the fire alarm 600 from the first relay device 700a, the earlier the monitoring time slot assigned to the fire alarm 600. Referring to Fig. 1, the maximum hop count from the first relay device 700a is "3" so that the number of monitoring time slots is also configured to be "3". If the maximum hop count from the first relay device 700a is "4", the number of monitoring time slots is also configured to be "4". The number of monitoring time slots is set in accordance with the hop count from the relay device 700 in the multihop network, but the embodiment is non-limiting as to this arrangement. When the relay device 700 is not driven by a battery, for example, the power consumption need not be reduced, and reception may take place constantly regardless of the time slot 1030. In that case, the monitoring time slot "N1" will be unnecessary. Further, one or more fire alarms 600 having the same hop count are allocated to the same monitoring time slot.

The assignment of the time slots 1030 is determined by the first relay device 700a or the management device 800. For example, the first relay device 700a or the management device 800 determines the assignment of the time slots 1030 based on the information on the relay routes. The first relay device 700a or the management device 800 notifies the fire alarms 600 of the assignment of the time slots 1030 thus determined. Therefore, the fire alarms 600 also have the knowledge of the assignment of the time slots 1030. As a result, the fire alarm 600 has the knowledge of the time slot 1030 in which the communication signal should be transmitted and which is assigned to the fire alarm 600. The fire alarm 600 also has the knowledge of the time slot 1030 in which the communication signal from the adjacent fire alarm 600 or the relay device 700 on the relay route can be received.

In this setup, the communication unit 620 of the fire alarm 600 may perform an intermittent receiving operation to reduce the power consumption. In the intermittent receiving operation in the communication unit 620, a receiving operation is performed during a predefined period of time in the leading portion of the time slot 1030, and a receiving operation is suspended in the remainder of the time slot 1030 if a signal (communication signal, monitoring signal) is not received during the predefined period of time. When a signal is received during the predefined period of time in the leading portion of the time slot 1030, on the other hand, a receiving operation is continued in the remainder of the time slot 1030.

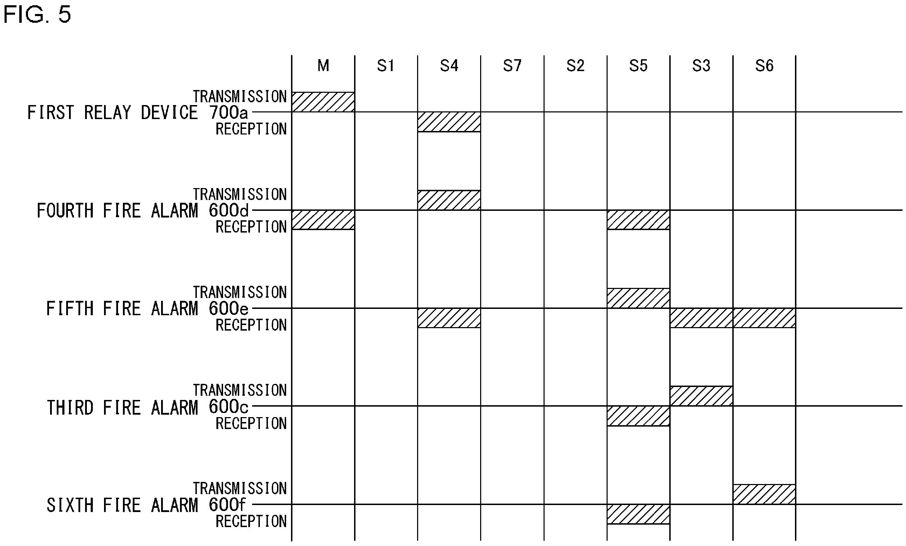

Fig. 5 shows an outline of downlink communication in the alarm system 1000. The figure shows downlink communication slots of Fig. 4. The first relay device 700a periodically transmits a synchronization signal to the plurality of fire alarms 600 that form the multihop network. The synchronization signal is, for example, a beacon signal. The synchronization signal is transmitted in, for example, the leading frame 1020 of the super frame 1010 shown in Fig. 3A and is not transmitted in the remaining frames 1020. The first relay device 700a transmits the synchronization signal in the time slot 1030 "M" in the leading frame 1020 of the super frame 1010. When the fourth fire alarm 600d receives the synchronization signal in the time slot 1030 "M", the fourth fire alarm 600d transfers the synchronization signal in the time slot 1030 "S4". Further, the fourth fire alarm 600d transmits a response signal to the first relay device 700a in the time slot 1030 "S4". The response signal is, for example, Ack (ACKnowledgment). The response signal may be included in a portion of the synchronization signal.

The first relay device 700a receives the response signal in the time slot 1030 "S4". When the fifth fire alarm 600e receives the synchronization signal in the time slot 1030 "S4", the fifth fire alarm 600e transfers the synchronization signal and transmits the response signal to the fourth fire alarm 600d in the time slot 1030 "S5". The fourth fire alarm 600d receives the response signal in the time slot 1030 "S5". The fourth fire alarm 600d transfers the response signal from the fifth fire alarm 600e to the first relay device 700a in the time slot 1030 "S4" of the next frame (not shown in Fig. 5). The fourth fire alarm 600d may transfer the response signal from the fifth fire alarm 600e to the first relay device 700a in the uplink communication time slot used in the uplink communication. Alternatively, the fourth fire alarm 600d may not transfer the response signal from the fifth fire alarm 600e to the first relay device 700a.

When the third fire alarm 600c receives the synchronization signal in the time slot 1030 "S5", the third fire alarm 600c transfers the synchronization signal and transmits the response signal to the fifth fire alarm 600e in the time slot 1030 "S3". When the sixth fire alarm 600f receives the synchronization signal in the time slot 1030 "S5", the sixth fire alarm 600f transfers the synchronization signal and transmits the response signal to the fifth fire alarm 600e in the time slot 1030 "S6".

The fifth fire alarm 600e receives the response signal in the time slots 1030 "S3" and "S6". The fifth fire alarm 600e transfers the response signal from the third fire alarm 600c and the response signal from the sixth fire alarm 600f to the fourth fire alarm 600d in the time slot 1030 "S5" of the next frame (not shown in Fig. 5). The fourth fire alarm 600d transfers the response signal from the fifth fire alarm 600e to the first relay device 700a in the time slot 1030 "S4" in the frame after next. The uplink communication time slot may be used for transfer of the response signal. The response signal may not be transferred.

Thus, the synchronization signal is transferred in the frame 1020 in which the first relay device 700a transmitted the synchronization signal. Further, the fire alarm 600 that received the synchronization signal from the first relay device 700a establishes and maintains timing synchronization with the first relay device 700a based on the synchronization signal. A publicly known technology may be used for timing synchronization so that a description thereof is omitted.

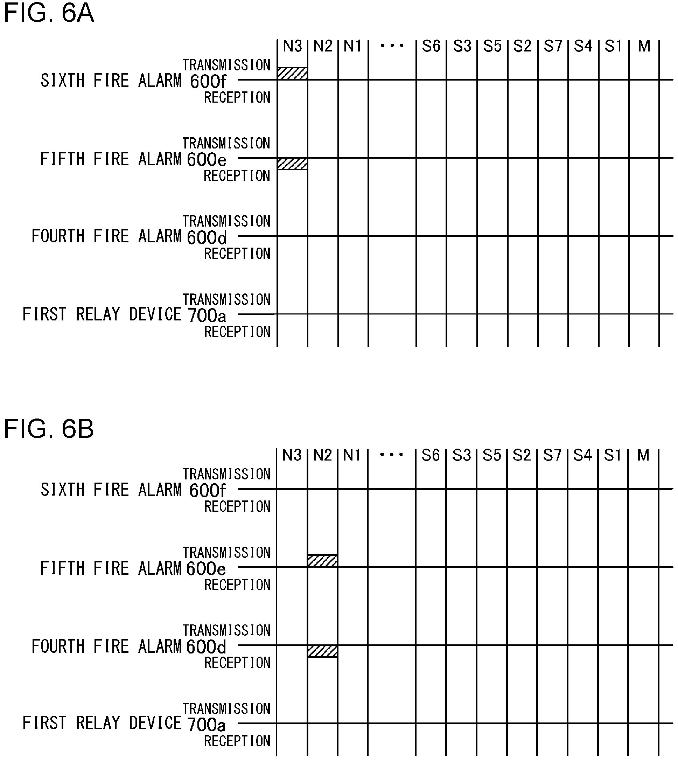

Figs. 6A-6C show an outline of uplink communication in the alarm system 1000. The figures show monitoring time slots and uplink communication time slots of Fig. 4. It is assumed here that the fire detection sensor 630 of the sixth fire alarm 600f detects an outbreak of a fire. The processing unit 622 of the sixth fire alarm 600f causes the communication unit 620 to transmit a detection result. The detection result includes identification information on the sixth fire alarm 600f that has detected the fire and also includes information relating to an abnormality. The communication unit 620 of the sixth fire alarm 600f transmits a monitoring signal in the monitoring time slot 1030 "N3". The fifth fire alarm 600e receives the monitoring signal in monitoring time slot 1030 "N3".

Fig. 6B shows a process that follows the process of Fig. 6A. The fifth fire alarm 600e that received the monitoring signal in the monitoring time slot 1030 "N3" transmits the monitoring signal in the monitoring time slot 1030 "N2". The fourth fire alarm 600d receives the monitoring signal in the monitoring time slot 1030 "N2".

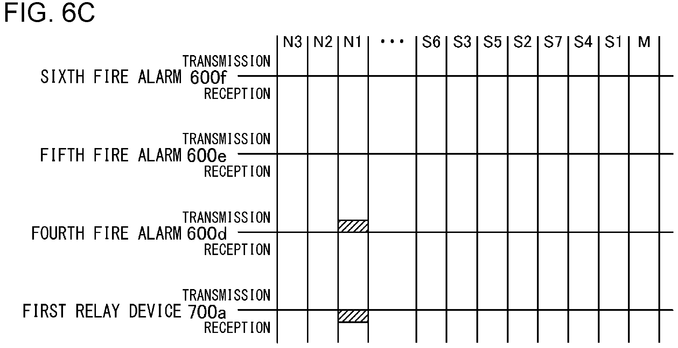

Fig. 6C shows a process that follows the process of Fig. 6B. The fourth fire alarm 600d that received the monitoring signal in the monitoring time slot 1030 "N2" transmits the monitoring signal in the monitoring time slot 1030 "N1". The first relay device 700a receives the monitoring signal in the monitoring time slot 1030 "N1".

As a result, the monitoring signal is transferred from the sixth fire alarm 600f on the lowest level in the multihop network to the first relay device 700a within one frame 1020. When the fire detection sensor 630 of the sixth fire alarm 600f does not detect a fire, on the other hand, the transfer as shown in Figs. 6A-6C is not performed.

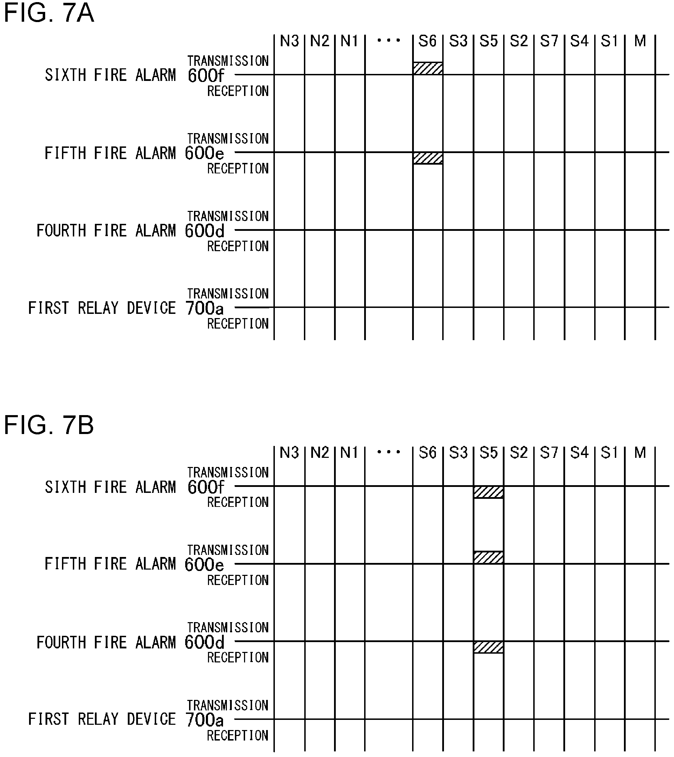

Figs. 7A-7D show an outline of uplink communication in the alarm system 1000. Fig. 7A shows a process that follows the process of Fig. 6C. The sixth fire alarm 600f that received the monitoring signal in the monitoring time slot 1030 "N3" transmits the detection result in the time slot 1030 "S6". The fifth fire alarm 600e receives the detection result in the time slot 1030 "S6". The monitoring unit 626 of the fifth fire alarm 600e monitors the reception of the monitoring signal in the monitoring time slot "N3". When the reception of the monitoring signal is not detected, the fifth fire alarm 600e suspends the process of receiving the communication signal in the time slots 1030 "S3" and "S6". When the monitoring unit 626 of the fifth fire alarm 600e detects the reception of the monitoring signal, on the other hand, the fifth fire alarm 600e receives the communication signal in the time slot 1030 "S3" or "S6".

Fig. 7B shows a process that follows the process of Fig. 7A. The fifth fire alarm 600e that received the detection result in the time slot 1030 "S6" transmits the detection result in the time slot 1030 "S5". Further, the fifth fire alarm 600e transmits the response signal to the sixth fire alarm 600f in the time slot 1030 "S5". The response signal may be included in a portion of the communication signal. The sixth fire alarm 600f receives the response signal in the time slot 1030 "S5". The fourth fire alarm 600d receives the detection result in the time slot 1030 "S5".

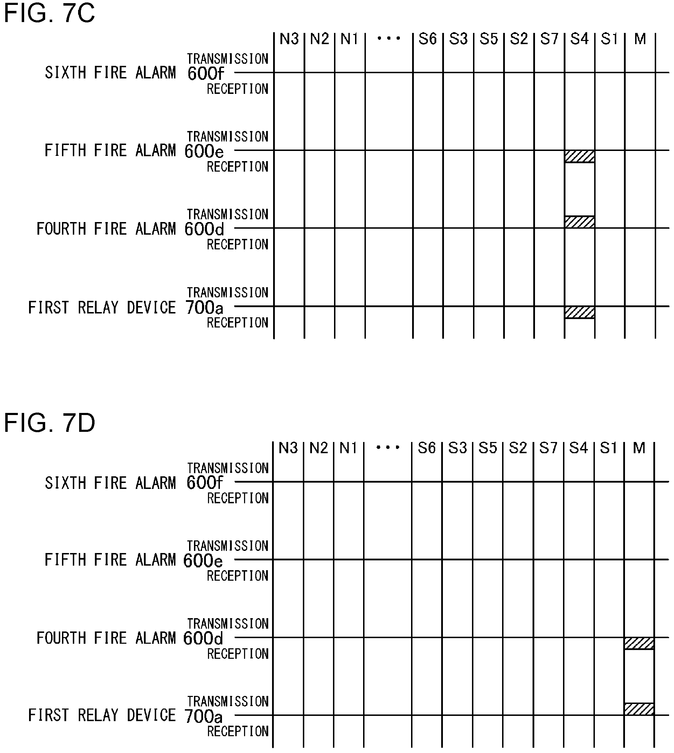

Fig. 7C shows a process that follows the process of Fig. 7B. The fourth fire alarm 600d that received the detection result in the time slot 1030 "S5" transfers the detection result and transmits the response signal to the fifth fire alarm 600e in the time slot 1030 "S4". The fifth fire alarm 600e receives the response signal in the time slot 1030 "S4". The fifth fire alarm 600e transfers the response signal from the fourth fire alarm 600d to the sixth fire alarm 600f in the time slot 1030 "S5" of the next frame 1020 (not shown in Fig. 7C). The sixth fire alarm 600f performs a receiving process in the time slot 1030 "S5" of the frame 1020 following the transmission of the detection result. The uplink communication time slot may be used for transfer of the response signal. The response signal may not be transferred. The first relay device 700a receives the detection result in the time slot 1030 "S4".

Fig. 7D shows a process that follows the process of Fig. 7C. The first relay device 700a that received the detection result in the time slot 1030 "S4" transmits the response signal in the time slot 1030 "M". The response signal is transferred by the fourth fire alarm 600d and the fifth fire alarm 600e and received by the sixth fire alarm 600f.

When the first relay device 700a receives a detection result from the fourth fire alarm 600d, the first relay device 700a transfers the detection result to the management device 800. When the management device 800 receives the detection result, the management device 800 identifies the fire alarm 600 that should sound an alarm based on the identification information included in the detection result. The correspondence between the identification information and the information on the fire alarm 600 that should sound an alarm is stored in the management device 800 in advance. The management device 800 transmits an instruction to sound an alarm to the identified fire alarm 600 as the ultimate destinations. The instruction to sound an alarm is transferred to the second relay device 700b and the third relay device 700c.

When the fire alarm 600 identified by the management device 800 are the third fire alarm 600c and the sixth fire alarm 600f, an instruction to sound an alarm is received by the third fire alarm 600c and the sixth fire alarm 600f by transferring signals in the same manner.

In this case, the instruction tc sound an alarm is transmitted instead of the synchronization signal of Fig. 6. When the instruction to sound an alarm is received from the management device 800 by way of the first relay device 700a, the second relay device 700b and the third relay device 700c transfer the instruction to sound an alarm to the fire alarms 600. When the communication units 620 of the third fire alarm 600c and the sixth fire alarm 600f receive the instruction to sound an alarm, the control unit 624 causes the buzzer 632 to sound an alarm. The control unit 624 may cause a light-emitting device to flash.

To highlight the uplink communication in the fifth fire alarm 600e, the fire alarms 600 having a hop count larger by "1" than the fifth fire alarm 600e are the third fire alarm 600c and the sixth fire alarm 600f. The communication unit 620 of the fifth fire alarm 600e can communicate with the third fire alarm 600c and the sixth fire alarm 600f.

Of the monitoring time slots "N3", "N2", and "N1" arranged on the time axis, the monitoring unit 626 monitors the reception of the monitoring signal in the monitoring time slot "N3". The monitoring time slot "N3" is the monitoring time slot in which the third fire alarm 600c or the sixth fire alarm 600f can transmit the monitoring signal.

When the monitoring unit 626 does not detect the reception of the monitoring signal, the control unit 624 suspends the process of receiving the communication signal in the communication time slots "S3" and "S6". When the monitoring unit 626 detects the reception of the monitoring signal, on the other hand, the control unit 624 causes the monitoring signal to be transmitted in the monitoring time slot "N2". Further, the control unit 624 causes the communication signal to be received in the communication time slot "S3" or "S6". Still further, the control unit 624 causes, when a communication signal is actually received, the communication signal to be transferred in the communication time slot "S5". In that process, the control unit 624 also transmits the response signal to the third fire alarm 600c or the sixth fire alarm 600f in the communication time slot "S5".

Unlike the communication signal, the monitoring signal described so far may be an unmodulated signal. In this case, the fire alarm 600 or the relay device 700 that receives the monitoring signal confirms a long (e.g., 1-100 ms) signal from the fire alarm 600 by repeating an intermittent reception process within the monitoring time slot a plurality of times to determine whether the reception of the monitoring signal is detected.

To illustrate the benefit of a plurality of monitoring time slots included in one frame, a description will be given below of the operation of the alarm system according to a comparative example in which one monitoring time slot is included in one frame. The alarm system according to the comparative example is of the same type as that of Fig. 1 and Fig. 2. The fire alarm, the relay device, and the management device included in the alarm system of the comparative example are also indicated as the fire alarm 600, the relay device 700, and the management device 800.
Further, the frame and the time slot in the alarm system of the comparative example are also indicated as the frame 1020 and the time slot 1030.

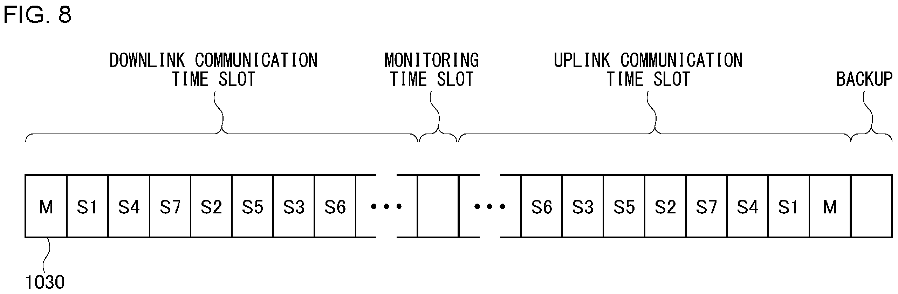

Fig. 8 shows an exemplary assignment of the time slots in the alarm system of the comparative example. Fig. 8 shows the assignment as similarly shown in Fig. 4 except that one monitoring time slot is arranged between the downlink communication time slot and the uplink communication time slot.

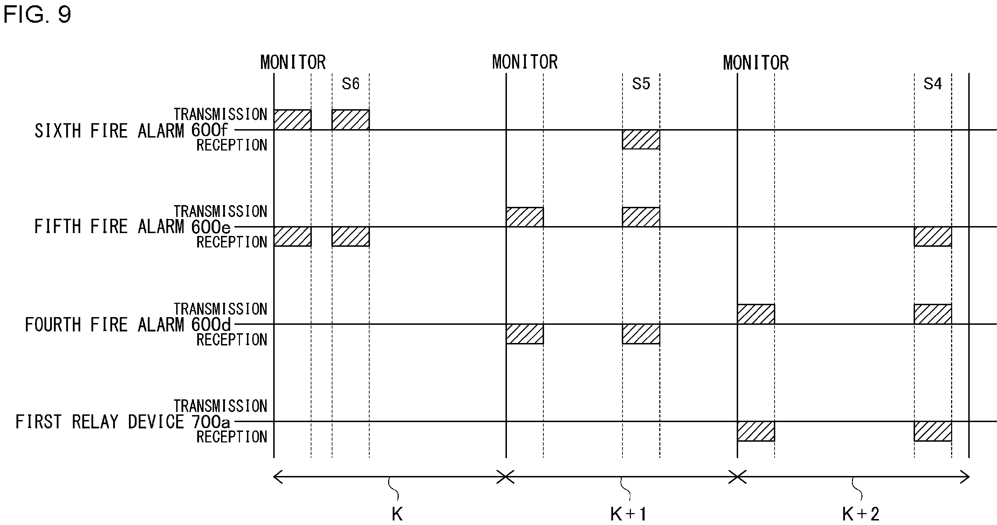

Fig. 9 shows an outline of uplink communication in the alarm system. The figure shows monitoring time slots and uplink communication time slots of Fig. 8. "Monitor" denotes a monitoring time slot. It is also assumed here that the fire detection sensor 630 of the sixth fire alarm 600f detects an outbreak of a fire. The sixth fire alarm 600f transmits the monitoring signal in the monitoring time slot of the frame 1020 "K" and transmits the detection result in the time slot 1030 "S6".

The fifth fire alarm 600e receives the monitoring signal in the monitoring time slot of the frame 1020 "K" and receives the detection result in the time slot 1030 "S6". In other words, the fifth fire alarm 600e monitors the reception of the monitoring signal in the monitoring time slot. When the reception of the monitoring signal is not detected, the fifth fire alarm 600e suspends the process of receiving a communication signal in the time slots 1030 "S3" and "S6". When the reception of the monitoring signal is detected, on the other hand, the fifth fire alarm 600e receives the communication signal in the time slot 1030 "S3" or "S6". Subsequently, the fifth fire alarm 600e transmits the monitoring signal in the monitoring time slot of the frame 1020 "K+1" and transfers the detection result in the time slot 1030 "S5". Further, the fifth fire alarm 600e transmits a response signal to the sixth fire alarm 600f in the time slot 1030 "S5". The response signal may be included in a portion of the synchronization signal.

The sixth fire alarm 600f receives the response signal in the time slot 1030 "S5" of the frame 1020 "K+1". The fourth fire alarm 600d receives the monitoring signal in the monitoring time slot of the frame 1020 "K+1" and receives the detection result in the time slot 1030 "S5". The fourth fire alarm 600d transmits the monitoring signal in the monitoring time slot of the frame 1020 "K+2", transfers the detection result in the time slot 1030 "S4", and transmits the response signal to the fifth fire alarm 600e.

The fifth fire alarm 600e receives the response signal in the time slot 1030 "S4" of the frame 1020 "K+2". The fifth fire alarm 600e transmits the monitoring signal in the monitoring time slot of the frame 1020 "K+3" and transfers the response signal from the fourth fire alarm 600d to the sixth fire alarm 600f in the time slot 1030 "S5" (not shown in Fig. 12).

The first relay device 700a receives the monitoring signal in the monitoring time slot of the frame 1020 "K+2" and receives the detection result in the time slot 1030 "S4". As in the foregoing case, the first relay device 700a transmits the monitoring signal in the monitoring time slot of the frame 1020 "K+3" and transmits the response signal in the time slot 1030 "M". The response signal is transferred by the fourth fire alarm 600d and the fifth fire alarm 600e and is received by the sixth fire alarm 600f.

When the first relay device 700a receives a detection result from the fourth fire alarm 600d, the first relay device 700a transfers the detection result to the management device 800. When the management device 800 receives the detection result, the management device 800 identifies the fire alarm 600 that should sound an alarm based on the identification information included in the detection result. The correspondence between the identification information and the information on the fire alarm 600 that should sound an alarm is stored in the management device 800 in advance. The management device 800 transmits an instruction to sound an alarm to the identified fire alarm 600 as the ultimate destination.

In other words, when one monitoring time slot is included in one frame 1020, a delay of a plurality of frames 1020 is incurred for transfer of the detection result. When a plurality of monitoring time slots are included in one frame 1020 as in the embodiment, on the other hand, the detection result is transferred within one frame.

The device, the system, or the entity that executes the method according to the disclosure is provided with a computer. By causing the computer to run a program, the function of the device, the system, or the entity that executes the method according to the disclosure is realized. The computer is comprised of a processor that operates in accordance with the program as a main hardware feature. The disclosure is non-limiting as to the type of the processor so long as the function is realized by running the program. The processor is comprised of one or a plurality of electronic circuits including a semiconductor integrated circuit (IC) or a large-scale integration (LSI). The plurality of electronic circuits may be integrated in one chip or provided in a plurality of chips. The plurality of chips may be aggregated in one device or provided in a plurality of apparatuses. The program is recorded in a non-transitory recording medium such as a computer-readable ROM, optical disk, and hard disk drive. The program may be stored in a recording medium in advance or supplied to a recording medium via a wide area communication network including the Internet.

According to the embodiment, the monitoring time slot is included in the frame 1020 of the multihop network. When the monitoring signal is not received in the monitoring time slot, the reception process in the uplink communication time slot is suspended so that the power consumption in the fire alarm 600 and the relay device 700 is reduced. Further, the power consumption in the fire alarm 600 and the relay device 700 is reduced so that the frequency of exchanging batteries for driving the fire alarm 600 and the relay device 700 is reduced. Further, the frequency of battery exchange is reduced so that the convenience for the user is improved. Further, a plurality of monitoring time slots are included in the frame 1020 of the multihop network so that transfer from the fire alarm 600 in the lowest level to the relay device 700 is performed within one frame 1020. Further, transfer from the fire alarm 600 in the lowest level to the relay device 700 is performed within one frame 1020 so that the delay time in transfer is reduced. Further, a plurality of monitoring time slots are included in the frame 1020 of the multihop network so that the delay time in transfer in the multihop network is reduced, while at the same time the power consumption is reduced.

Further, the response signal is also transmitted in the communication time slot in which the communication signal should be transferred so that transmission of the response signal is performed efficiently. Further, the number of monitoring time slots is set in accordance with the maximum hop count to the relay device 700 in the multihop network so that the fire alarm 600 with a different hop count is allowed to use a further monitoring time slot. Further, the fire alarm 600 with a different hop count is allowed to use a further monitoring time slot so that collision of monitoring signals from fire alarms 600 with different hop counts is prevented. Further, one or more fire alarms 600 having the same hop count are allocated to the same monitoring time slot so that an increase in the monitoring time slots is suppressed. Further, the communication signal includes information relating to an abnormality so that the relay device 700 or the management device 800 is notified of the abnormality.

A plurality of time slots 1030 are included in the frame 1020 of the multihop network, and each time slot 1030 is assigned to the fire alarm 600 so that collision of signals is inhibited. The fire alarms 600 are allocated to the time slots 1030 in the order determined by the hop count from the relay device 700 so that the transfer is performed efficiently. Further, whether the monitoring signal is available is determined by repeating intermittent reception a plurality of times so that a determination error due to the noise that lasts a short period of time (a signal having the same frequency but does not contain desired waves) is eliminated. Further, a determination error due to the noise that lasts a short period of time is eliminated so that further transmission of the monitoring signal or reception operation in the uplink communication time slot is suspended even when the noise that lasts a short period of time is imposed (in error) in the monitoring time slot.

Described above is an explanation based on an exemplary embodiment. The embodiment is intended to be illustrative only and it will be understood by those skilled in the art that various modifications to constituting elements and processes could be developed and that such modifications are also within the scope of the present invention.

In the embodiment, the relay device 700 connects the fire alarms 600 each provided with the function of detecting a fire and the function of outputting an alarm sound. Alternatively, however, the fire alarm 600 may only be provided with the function of detecting a fire. Instead of the fire alarm 600 for detecting a fire, sensors for detecting flood damage, earthquakes, gas leakage, or generation of CO (carbon monoxide) due to imperfect combustion may be provided. According to this variation, the flexibility in the configuration is improved.

### [REFERENCE SIGNS LIST]

600 fire alarm (alarm), 620 communication unit, 622 processing unit, 624 control unit, 626 monitoring unit, 630 fire detection sensor, 632 buzzer, 700 relay device, 800 management device, 1000 alarm system

## Claims

1. A first alarm (600) of a plurality of alarms (600) that form a multihop network extending from a relay device (700), comprising:
a communication unit (620) capable of communicating with the relay device (700) with a hop count i (i is an integer equal to or larger than 1) and also capable of communicating with a second alarm (600) and a third alarm (600) capable of communicating with the relay device (700) with a hop count i+1;
a first communication time slot in which the first alarm (600) is configured to transmit a communication signal, a second communication time slot in which the second alarm (600) is configured to transmit a communication signal, and a third communication time slot in which the third alarm (600) is configured to transmit a communication signal being arranged on a time axis,
a first monitoring time slot in which the first alarm (600) is configured to transmit a monitoring signal and a second monitoring time slot in which the second alarm (600) or the third alarm (600) is configured to transmit a monitoring signal being arranged earlier than the first communication time slot, the second communication time slot, and the third communication time slot, and
the first monitoring time slot being arranged later than the second monitoring time slot,
the first communication time slot being arranged later than the second communication time slot and the third communication time slot,
the alarm further comprising:
a monitoring unit configured to monitor reception of the monitoring signal in the second monitoring time slot;
a control unit (624) configured to suspend a process of receiving the communication signal in the second communication time slot and the third communication time slot when the monitoring unit (626) does not detect reception of the monitoring signal,
and the control unit (624) being further configured, when the monitoring unit (626) detects reception of the monitoring signal, to cause the monitoring signal to be transmitted in the first monitoring time slot and then cause the communication signal to be received in the second communication time slot or the third communication time slot and then also cause the communication signal which was received in the second communication time slot or the third communication time slot to be transferred in the first communication time slot.

2. An alarm system (1000) comprising:
a plurality of alarms (600) that form a multihop network extending from a relay device (700), wherein
the plurality of alarms (600) include the first alarm (600) according to claim 1, the second alarm (600), and the third alarm (600.

3. The alarm system (1000) according to claim 2,
wherein
when the communication signal is received in the second communication time slot or the third communication time slot, the first alarm (600) is configured to transmit, in the first communication time slot, a response signal to the second alarm (600) or the third alarm (600) as well.

4. The alarm system (1000) according to claim 2 or 3, wherein
the number of a plurality of monitoring time slots including the first monitoring time slot and the second monitoring time slot is set in accordance with the maximum hop count to the relay device (700) in the multihop network.

5. The alarm system (1000) according to claim 4,
wherein
one or more alarms (600) having the same hop count are allocated to the same monitoring time slot.

6. The alarm system (1000) according to any one of claims 2 through 5, wherein
the communication signal includes information on an abnormality.

7. The alarm system (1000) according to any one of claims 2 through 6, wherein
the monitoring signal is an unmodulated signal,
the first alarm (600) is configured to determine whether the monitoring signal is received by repeating intermittent reception in the second monitoring time slot a plurality of times.

8. A transfer method in an alarm (600) of a plurality of alarms (600) that form a multihop network extending from a relay device (700),
the alarm (600) communicating with the relay device (700) with a hop count i (i is an integer equal to or larger than 1) and also communicating with a second alarm (600) and a third alarm (600) communicating with the relay device (700) with a hop count i+1,
a first communication time slot in which the first alarm (600) is configured to transmit a communication signal, a second communication time slot in which the second alarm (600) is configured to transmit a communication signal, and a third communication time slot in which the third alarm (600) is configured to transmit a communication signal being arranged on a time axis,
a first monitoring time slot in which the first alarm (600) is configured to transmit a monitoring signal and a second monitoring time slot in which the second alarm (600) or the third alarm (600) is configured to transmit a monitoring signal being arranged earlier than the first communication time slot, the second communication time slot, and the third communication time slot,
the transfer method comprising:
monitoring reception of the monitoring signal in the second monitoring time slot,
the first monitoring time slot being arranged later than the second monitoring time slot, the first communication time slot being arranged later than the second communication time slot and the third communication time slot,
the transfer method further comprising:
suspending a process of receiving the communication signal in the second communication time slot and the third communication time slot when reception of the monitoring signal is not detected, causing the monitoring signal to be transmitted in the first monitoring time slot when reception of the monitoring signal is detected, and then causing the communication signal to be received in the second communication time slot or the third communication time slot and causing the communication signal to be transferred in the first communication time slot.

9. A program for execution by an alarm (600) of a plurality of alarms (600) that form a multihop network extending from a relay device (700),
the alarm (600) being capable of communicating with the relay device (700) with a hop count i (i is an integer equal to or larger than 1) and also capable of communicating with a second alarm (600) and a third alarm (600) capable of communicating the relay device (700) with a hop count i+1,
a first communication time slot in which the alarm (600) is configured to transmit a communication signal, a second communication time slot in which the second alarm (600) is configured to transmit a communication signal, and a third communication time slot in which the third alarm (600) is configured to transmit a communication signal being arranged on a time axis,
a first monitoring time slot in which the first alarm (600) is configured to transmit a monitoring signal and a second monitoring time slot in which the second alarm (600) or the third alarm (600) is configured to transmit a monitoring signal being arranged earlier than the first communication time slot, the second communication time slot, and the third communication time slot,
the program comprising computer-implemented modules including:
a module that is configured to monitor reception of the monitoring signal in the second monitoring time slot,
the first monitoring time slot being arranged later than the second monitoring time slot, the first communication time slot being arranged later than the second communication time slot and the third communication time slot,
the program further comprising:
a module that is configured to suspend a process of receiving the communication signal in the second communication time slot and the third communication time slot when reception of the monitoring signal is not detected, cause the monitoring signal to be transmitted in the first monitoring time slot when reception of the monitoring signal is detected, and then cause the communication signal to be received in the second communication time slot or the third communication time slot and cause the communication signal to be transferred in the first communication time slot.

## Patentansprüche

1. Erster Alarm (600) von mehreren Alarmen (600), die ein Multihop-Netzwerk bilden, das sich von einer Relaisvorrichtung (700) aus erstreckt, aufweisend:
eine Kommunikationseinheit (620), die in der Lage ist, mit der Relaisvorrichtung (700) mit einem Hop-Zählwert i (i ist eine ganze Zahl gleich oder größer als 1) zu kommunizieren, und auch in der Lage ist, mit einem zweiten Alarm (600) und einem dritten Alarm (600) zu kommunizieren, die in der Lage sind, mit der Relaisvorrichtung (700) mit einem Hop-Zählwert i+1 zu kommunizieren;
wobei ein erster Kommunikationszeitschlitz, in dem der erste Alarm (600) konfiguriert ist, um ein Kommunikationssignal zu übertragen, ein zweiter Kommunikationszeitschlitz, in dem der zweite Alarm (600) konfiguriert ist, um ein Kommunikationssignal zu übertragen, und ein dritter Kommunikationszeitschlitz, in dem der dritte Alarm (600) konfiguriert ist, um ein Kommunikationssignal zu übertragen, auf einer Zeitachse angeordnet sind,
ein erster Überwachungszeitschlitz, in dem der erste Alarm (600) konfiguriert ist, um ein Überwachungssignal zu übertragen, und ein zweiter Überwachungszeitschlitz, in dem der zweite Alarm (600) oder der dritte Alarm (600) konfiguriert ist, um ein Überwachungssignal zu übertragen, früher angeordnet sind als der erste Kommunikationszeitschlitz, der zweite Kommunikationszeitschlitz und der dritte Kommunikationszeitschlitz, und
der erste Überwachungszeitschlitz später angeordnet ist als der zweite Überwachungszeitschlitz,
der erste Kommunikationszeitschlitz später als der zweite Kommunikationszeitschlitz und der dritte Kommunikationszeitschlitz angeordnet ist,
der Alarm ferner aufweist:
eine Überwachungseinheit, die konfiguriert ist, um einen Empfang des Überwachungssignals in dem zweiten Überwachungszeitschlitz zu überwachen;
eine Steuereinheit (624), die konfiguriert ist, um einen Empfangsvorgang des Kommunikationssignals in dem zweiten Kommunikationszeitschlitz und in dem dritten Kommunikationszeitschlitz zu unterbrechen, wenn die Überwachungseinheit (626) keinen Empfang des Überwachungssignals erfasst,
und die Steuereinheit (624) ferner konfiguriert ist, um, wenn die Überwachungseinheit (626) einen Empfang des Überwachungssignals erfasst, zu veranlassen, dass das Überwachungssignal in dem ersten Überwachungszeitschlitz übertragen wird, und dann zu veranlassen, dass das Kommunikationssignal in dem zweiten Kommunikationszeitschlitz oder in dem dritten Kommunikationszeitschlitz empfangen wird, und dann auch zu veranlassen, dass das Kommunikationssignal, das in dem zweiten Kommunikationszeitschlitz oder in dem dritten Kommunikationszeitschlitz empfangen wurde, in dem ersten Kommunikationszeitschlitz übertragen wird.

2. Alarmsystem (1000), aufweisend:
mehrere Alarme (600), die ein Multihop-Netzwerk bilden, das sich von einer Relaisvorrichtung (700) erstreckt, wobei
die mehreren Alarme (600) den ersten Alarm (600) nach Anspruch 1, den zweiten Alarm (600) und den dritten Alarm (600) enthalten.

3. Alarmsystem (1000) nach Anspruch **2,** wobei
der erste Alarm (600) konfiguriert ist, um, wenn das Kommunikationssignal in dem zweiten Kommunikationszeitschlitz oder in dem dritten Kommunikationszeitschlitz empfangen wird, auch in dem ersten Kommunikationszeitschlitz ein Antwortsignal an den zweiten Alarm (600) oder den dritten Alarm (600) zu übertragen.

4. Alarmsystem (1000) nach Anspruch 2 oder 3, wobei
die Anzahl mehrerer Überwachungszeitschlitze, die den ersten Überwachungszeitschlitz und den zweiten Überwachungszeitschlitz enthalten, in Übereinstimmung mit dem maximalen Hop-Zählwert zu der Relaisvorrichtung (700) in dem Multihop-Netzwerk eingestellt wird.

5. Alarmsystem (1000) nach Anspruch 4, wobei
ein oder mehrere Alarme (600) mit demselben Hop-Zählwert demselben Überwachungszeitschlitz zugeordnet werden.

6. Alarmsystem (1000) nach einem der Ansprüche 2 bis 5,
wobei das Kommunikationssignal Informationen über eine Anomalie enthält.

7. Alarmsystem (1000) nach einem der Ansprüche 2 bis 6, wobei das Überwachungssignal ein unmoduliertes Signal ist,
der erste Alarm (600) konfiguriert ist, um durch mehrmaliges Wiederholen eines intermittierenden Empfangs in dem zweiten Überwachungszeitschlitz zu bestimmen, ob das Überwachungssignal empfangen wird.

8. Übertragungsverfahren in einem Alarm (600) von mehreren Alarmen (600), die ein Multihop-Netzwerk bilden, das sich von einer Relaisvorrichtung (700) erstreckt,
wobei der Alarm (600) mit der Relaisvorrichtung (700) mit einem Hop-Zählwert i (i ist eine ganze Zahl gleich oder größer als 1) kommuniziert und auch mit einem zweiten Alarm (600) und einem dritten Alarm (600) kommuniziert, die mit der Relaisvorrichtung (700) mit einem Hop-Zählwert i+1 kommunizieren,
ein erster Kommunikationszeitschlitz, in dem der erste Alarm (600) konfiguriert ist, um ein Kommunikationssignal zu übertragen, ein zweiter Kommunikationszeitschlitz, in dem der zweite Alarm (600) konfiguriert ist, um ein Kommunikationssignal zu übertragen, und ein dritter Kommunikationszeitschlitz, in dem der dritte Alarm (600) konfiguriert ist, um ein Kommunikationssignal zu übertragen, auf einer Zeitachse angeordnet sind,
ein erster Überwachungszeitschlitz, in dem der erste Alarm (600) konfiguriert ist, um ein Überwachungssignal zu übertragen, und ein zweiter Überwachungszeitschlitz, in dem der zweite Alarm (600) oder der dritte Alarm (600) konfiguriert ist, um ein Überwachungssignal zu übertragen, früher angeordnet ist als der erste Kommunikationszeitschlitz, der zweite Kommunikationszeitschlitz und der dritte Kommunikationszeitschlitz,
wobei das Übertragungsverfahren umfasst:
Überwachen des Empfangs des Überwachungssignals in dem zweiten Überwachungszeitschlitz,
wobei der erste Überwachungszeitschlitz später als der zweite Überwachungszeitschlitz angeordnet ist, der erste Kommunikationszeitschlitz später als der zweite Kommunikationszeitschlitz und der dritte Kommunikationszeitschlitz angeordnet ist,
wobei das Übertragungsverfahren ferner umfasst:
Unterbrechen eines Empfangsvorgangs des Kommunikationssignals in dem zweiten Kommunikationszeitschlitz und in dem dritten Kommunikationszeitschlitz, wenn kein Empfang des Überwachungssignals erfasst wird, Veranlassen, dass das Überwachungssignal in dem ersten Überwachungszeitschlitz übertragen wird, wenn ein Empfang des Überwachungssignals erfasst wird, und dann Veranlassen, dass das Kommunikationssignal in dem zweiten Kommunikationszeitschlitz oder in dem dritten Kommunikationszeitschlitz empfangen wird, und Veranlassen, dass das Kommunikationssignal in dem ersten Kommunikationszeitschlitz übertragen wird.

9. Programm zur Ausführung durch einen Alarm (600) von mehreren Alarmen (600), die ein Multihop-Netzwerk bilden, das sich von einer Relaisvorrichtung (700) erstreckt,
wobei der Alarm (600) in der Lage ist, mit der Relaisvorrichtung (700) mit einem Hop-Zählwert i (i ist eine ganze Zahl gleich oder größer als 1) zu kommunizieren, und auch in der Lage ist, mit einem zweiten Alarm (600) und einem dritten Alarm (600) zu kommunizieren, die in der Lage sind, mit der Relaisvorrichtung (700) mit einem Hop-Zählwert i+1 zu kommunizieren,
ein erster Kommunikationszeitschlitz, in dem der Alarm (600) konfiguriert ist, ein Kommunikationssignal zu übertragen, ein zweiter Kommunikationszeitschlitz, in dem der zweite Alarm (600) konfiguriert ist, ein Kommunikationssignal zu übertragen, und ein dritter Kommunikationszeitschlitz, in dem der dritte Alarm (600) konfiguriert ist, ein Kommunikationssignal zu übertragen, auf einer Zeitachse angeordnet sind,
ein erster Überwachungszeitschlitz, in dem der erste Alarm (600) konfiguriert ist, ein Überwachungssignal zu übertragen, und ein zweiter Überwachungszeitschlitz, in dem der zweite Alarm (600) oder der dritte Alarm (600) konfiguriert ist, ein Überwachungssignal zu übertragen, früher angeordnet ist als der erste Kommunikationszeitschlitz, der zweite Kommunikationszeitschlitz und der dritte Kommunikationszeitschlitz,
wobei das Programm computerimplementierte Module aufweist, die enthalten:
ein Modul, das konfiguriert ist, um den Empfang des Überwachungssignals in dem zweiten Überwachungszeitschlitz zu überwachen,
wobei der erste Überwachungszeitschlitz später als der zweite Überwachungszeitschlitz angeordnet ist, der erste Kommunikationszeitschlitz später als der zweite Kommunikationszeitschlitz und der dritte Kommunikationszeitschlitz angeordnet ist,
wobei das Programm ferner aufweist:
ein Modul, das konfiguriert ist, um einen Empfangsvorgang des Kommunikationssignals in dem zweiten Kommunikationszeitschlitz und in dem dritten Kommunikationszeitschlitz zu unterbrechen, wenn kein Empfang des Überwachungssignals erfasst wird, zu veranlassen, dass das Überwachungssignal in dem ersten Überwachungszeitschlitz übertragen wird, wenn ein Empfang des Überwachungssignals erfasst wird, und dann zu veranlassen, dass das Kommunikationssignal in dem zweiten Kommunikationszeitschlitz oder in dem dritten Kommunikationszeitschlitz empfangen wird, und zu veranlassen, dass das Kommunikationssignal in dem ersten Kommunikationszeitschlitz übertragen wird.

## Revendications

1. Première alarme (600) d'une pluralité d'alarmes (600) qui forment un réseau à sauts multiples s'étendant depuis un dispositif relais (700), comprenant :
une unité de communication (620) capable de communiquer avec le dispositif relais (700) avec un nombre de sauts i (i est un entier égal ou supérieur à 1) et également capable de communiquer avec une deuxième alarme (600) et une troisième alarme (600) capable de communiquer avec le dispositif relais (700) avec un nombre de sauts i+1 ;
un premier intervalle de temps de communication dans lequel la première alarme (600) est configurée pour transmettre un signal de communication, un deuxième intervalle de temps de communication dans lequel la deuxième alarme (600) est configurée pour transmettre un signal de communication, et un troisième intervalle de temps de communication dans lequel la troisième alarme (600) est configurée pour transmettre un signal de communication étant disposés sur un axe temporel,
un premier intervalle de temps de surveillance dans lequel la première alarme (600) est configurée pour transmettre un signal de surveillance et un deuxième intervalle de temps de surveillance dans lequel la deuxième alarme (600) ou la troisième alarme (600) est configurée pour transmettre un signal de surveillance étant disposé avant le premier intervalle de temps de communication, le deuxième intervalle de temps de communication et le troisième intervalle de temps de communication, et
le premier intervalle de temps de surveillance étant disposé après le deuxième intervalle de temps de surveillance,
le premier intervalle de temps de communication étant disposé après le deuxième intervalle de temps de communication et le troisième intervalle de temps de communication,
l'alarme comprenant en outre :
une unité de surveillance configurée pour surveiller la réception du signal de surveillance dans le deuxième intervalle de temps de surveillance ;
une unité de commande (624) configurée pour suspendre un processus de réception du signal de communication dans le deuxième intervalle de temps de communication et le troisième intervalle de temps de communication lorsque l'unité de surveillance (626) ne détecte pas la réception du signal de surveillance,
et l'unité de commande (624) étant en outre configurée, lorsque l'unité de surveillance (626) détecte la réception du signal de surveillance, pour amener le signal de surveillance à être transmis dans le premier intervalle de temps de surveillance, et ensuite amener le signal de communication à être reçu dans le deuxième intervalle de temps de communication ou le troisième intervalle de temps de communication, puis amener en outre le signal de communication qui a été reçu dans le deuxième intervalle de temps de communication ou le troisième intervalle de temps de communication à être transféré dans le premier intervalle de temps de communication.

2. Système d'alarme (1000) comprenant :
une pluralité d'alarmes (600) qui forment un réseau à sauts multiples s'étendant depuis un dispositif relais (700), dans lequel
la pluralité d'alarmes (600) comprend la première alarme (600) selon la revendication 1, la deuxième alarme (600) et la troisième alarme (600).

3. Système d'alarme (1000) selon la revendication 2, dans lequel
lorsque le signal de communication est reçu dans le deuxième intervalle de temps de communication ou le troisième intervalle de temps de communication, la première alarme (600) est configurée pour transmettre, dans le premier intervalle de temps de communication, un signal de réponse à la deuxième alarme (600) ou à la troisième alarme (600) également.

4. Système d'alarme (1000) selon la revendication 2 ou 3, dans lequel
le nombre d'une pluralité d'intervalles de temps de surveillance comprenant le premier intervalle de temps de surveillance et le deuxième intervalle de temps de surveillance est défini en fonction du nombre maximal de sauts jusqu'au dispositif relais (700) dans le réseau à sauts multiples.

5. Système d'alarme (1000) selon la revendication 4, dans lequel
une ou plusieurs alarmes (600) ayant le même nombre de sauts sont attribuées au même intervalle de temps de surveillance.

6. Système d'alarme (1000) selon l'une quelconque des revendications 2 à 5, dans lequel
le signal de communication comprend des informations sur une anomalie.

7. Système d'alarme (1000) selon l'une quelconque des revendications 2 à 6, dans lequel
le signal de surveillance est un signal non modulé,
la première alarme (600) est configurée pour déterminer si le signal de surveillance est reçu en répétant la réception intermittente dans le deuxième intervalle de temps de surveillance une pluralité de fois.

8. Procédé de transfert dans une alarme (600) d'une pluralité d'alarmes (600) qui forment un réseau à sauts multiples s'étendant depuis un dispositif relais (700),
l'alarme (600) communiquant avec le dispositif relais (700) avec un nombre de sauts i (i est un entier supérieur ou égal à 1) et communiquant également avec une deuxième alarme (600) et une troisième alarme (600) communiquant avec le dispositif relais (700) avec un nombre de sauts i+1,
un premier intervalle de temps de communication dans lequel la première alarme (600) est configurée pour transmettre un signal de communication, un deuxième intervalle de temps de communication dans lequel la deuxième alarme (600) est configurée pour transmettre un signal de communication, et un troisième intervalle de temps de communication dans lequel la troisième alarme (600) est configurée pour transmettre un signal de communication étant disposés sur un axe temporel,
un premier intervalle de temps de surveillance dans lequel la première alarme (600) est configurée pour transmettre un signal de surveillance et un deuxième intervalle de temps de surveillance dans lequel la deuxième alarme (600) ou la troisième alarme (600) est configurée pour transmettre un signal de surveillance étant disposé avant le premier intervalle de temps de communication, le deuxième intervalle de temps de communication et le troisième intervalle de temps de communication,
le procédé de transfert comprenant :
la surveillance de la réception du signal de surveillance dans le deuxième intervalle de temps de surveillance,
le premier intervalle de temps de surveillance étant disposé après le deuxième intervalle de temps de surveillance, le premier intervalle de temps de communication étant disposé après le deuxième intervalle de temps de communication et le troisième intervalle de temps de communication,
le procédé de transfert comprenant en outre :
la suspension d'un processus de réception du signal de communication dans le deuxième intervalle de temps de communication et le troisième intervalle de temps de communication lorsque la réception du signal de surveillance n'est pas détectée, la provocation de la transmission du signal de surveillance dans le premier intervalle de temps de surveillance lorsque la réception du signal de surveillance est détectée, puis la provocation de la réception du signal de communication dans le deuxième intervalle de temps de communication ou le troisième intervalle de temps de communication et la provocation du transfert du signal de communication dans le premier intervalle de temps de communication.

9. Programme destiné à être exécuté par une alarme (600) d'une pluralité d'alarmes (600) qui forment un réseau à sauts multiples s'étendant depuis un dispositif relais (700),
l'alarme (600) étant capable de communiquer avec le dispositif relais (700) avec un nombre de sauts i (i est un entier égal ou supérieur à 1) et également capable de communiquer avec une deuxième alarme (600) et une troisième alarme (600) capable de communiquer avec le dispositif relais (700) avec un nombre de sauts i+1,
un premier intervalle de temps de communication dans lequel l'alarme (600) est configurée pour transmettre un signal de communication, un deuxième intervalle de temps de communication dans lequel la deuxième alarme (600) est configurée pour transmettre un signal de communication, et un troisième intervalle de temps de communication dans lequel la troisième alarme (600) est configurée pour transmettre un signal de communication étant disposés sur un axe temporel,
un premier intervalle de temps de surveillance dans lequel la première alarme (600) est configurée pour transmettre un signal de surveillance et un deuxième intervalle de temps de surveillance dans lequel la deuxième alarme (600) ou la troisième alarme (600) est configurée pour transmettre un signal de surveillance étant disposé avant le premier intervalle de temps de communication, le deuxième intervalle de temps de communication et le troisième intervalle de temps de communication,
le programme comprenant des modules mis en œuvre par ordinateur, comprenant :
un module qui est configuré pour surveiller la réception du signal de surveillance dans le deuxième intervalle de temps de surveillance,
le premier intervalle de temps de surveillance étant disposé après le deuxième intervalle de temps de surveillance, le premier intervalle de temps de communication étant disposé après le deuxième intervalle de temps de communication et le troisième intervalle de temps de communication,
le programme comprenant en outre :
un module qui est configuré pour suspendre un processus de réception du signal de communication dans le deuxième intervalle de temps de communication et le troisième intervalle de temps de communication lorsque la réception du signal de surveillance n'est pas détectée, amener le signal de surveillance à être transmis dans le premier intervalle de temps de surveillance lorsque la réception du signal de surveillance est détectée, et ensuite amener le signal de communication à être reçu dans le deuxième intervalle de temps de communication ou le troisième intervalle de temps de communication et amener le signal de communication à être transféré dans le premier intervalle de temps de communication.
